# EUROPEAN PATENT APPLICATION

(11) **EP 2 482 172 A1**
(43) Date of publication of application: **01.08.2012**
(21) Application number: 10826526.5
(22) Date of filing: 14.10.2010
(51) Int. Cl.: G06F 3/041, G06F 3/044

(54) **DISPLAY DEVICE WITH TOUCH PANEL**

(30) Priority: 30.10.2009 JP 2009250529
(71) Applicant: Sharp Kabushiki Kaisha, Osaka-shi, Osaka 545-8522 (JP)
(72) Inventor: MISAKI Katsunori, Tottori 689-3524 (JP)
(74) Representative: Müller-Boré & Partner Patentanwälte
(86) International application number: PCT/JP2010/068067
(87) International publication number: WO 2011/052392

(57) **Abstract**

A touch panel-equipped display device is provided that includes, on the front substrate of the display panel, touch electrodes that allow an exact touch location to be determined with simple structure. The device includes: a display panel (120) having a front substrate (1) and a back substrate (11) and having an image display region composed of a plurality of pixels; and a touch panel module (110) having touch electrodes (2) formed on an outer surface of the front substrate (1), wherein each of the touch electrodes (2) is formed of a metal material (6) disposed in a pattern that overlaps, when viewed in the thickness direction of the display panel (120), areas (7, 13) outside an opening of one of the pixels formed on at least one of the front substrate (1) and the back substrate (11).

## Description

### TECHNICAL FIELD

The present invention relates to a touch panel-equipped display device including a display panel capable of displaying an image or the like and a touch panel module that uses touch electrodes formed on the front substrate of the display panel to determine a touch location, and more particularly, a touch panel-equipped display device including low-resistance touch electrodes to determine a touch location with high precision.

### BACKGROUND ART

In the recent years, the use of touch panels formed on a transparent substrate as an input device combined with a display device has become more common as personal digital assistants (PDAs), palmtop computers, portable gaming electronics and the like become increasingly popular.

For example, in a liquid crystal display device, an example of a touch panel-equipped display device, a transparent touch panel is placed over the image display surface of the liquid crystal panel, i.e. the display panel. Thus, an image displayed on the liquid crystal panel can be viewed through the touch panel. Then, when the user depresses, with a fingertip or stylus, the outer surface of the touch panel, i.e. the side of the liquid crystal panel that the user looks at to view a displayed image, the depressed location can be determined. As a result, input can be reflected in controls of the equipment such as a PDA.

One of such touch panels placed over the image display surface of display panels is a capacitive touch panel, which includes a transparent conductive film such as indium tin oxide (ITO) formed on the front substrate of the display panel. Such capacitive touch panels are now used in different applications as they are easy to fabricate and highly durable. Particularly, projection-type capacitive touch panels having a plurality of touch electrodes spaced apart with a predetermined distance and forming a predetermined planar pattern are getting particular attention since they provide so-called multi-touch functionality, where a plurality of touches are detected simultaneously.

As discussed above, a capacitive touch panel has used a transparent conductive film such as indium tin oxide (ITO) for touch electrodes to increase visibility of a displayed image through the touch panel. However, since a transparent conductive film has a higher resistance than a metal film, the touch electrodes in the touch panel are often formed of transparent conductive film while the terminals for connecting the touch panel with external circuitry and the traces connecting the touch electrodes with the terminals are formed of a metal or formed by stacking a transparent conductive film and a metal. To ensure electrical conduction of the touch electrodes and traces, forming a thick transparent conductive film for connection has been proposed (see JP2008-233976A).

### DISCLOSURE OF THE INVENTION

However, in a conventional touch panel of a touch panel-equipped display device with a transparent conductive film for touch electrodes, a sufficient level of electrical conduction at the touch electrodes may not be ensured. Consequently, particularly with a fine touch electrode pattern or in a large area touch panel, an exact touch location cannot be determined.

In view of the above problems, an object of the present invention is to provide a touch panel-equipped display device with simple structure including touch electrodes capable of determining an exact touch location on the front substrate of the display panel.

To solve the above problems, a touch panel-equipped display device of the present invention includes: a display panel having a front substrate and a back substrate and having an image display region composed of a plurality of pixels; and a touch panel module having touch electrodes formed on an outer surface of the front substrate, wherein each of the touch electrodes is formed of a metal material disposed in a pattern that overlaps, when viewed in a thickness direction of the display panel, an area outside an opening of one of the pixels formed on at least one of the front substrate and the back substrate.

In the touch panel-equipped display device of the present invention, each of the touch electrodes of the touch panel module is formed of a metal material disposed in a pattern that overlaps, when viewed in the thickness direction of the display panel, areas outside the opening of one of the pixels formed on at least one of the front substrate and the back substrate. This will realize touch electrodes that have a significantly lower resistance than a transparent conductive film without adversely affecting the visibility of a displayed image on the display panel, thereby enabling determining a precise touch location.

### BRIEF DESCRIPTION OF THE DRAWINGS

[FIG. 1] Fig. 1 is a plan view of a touch panel-equipped display device according to a first embodiment of the present invention, showing the pattern of touch electrodes of the touch panel module.
[FIG. 2] FIG. 2 shows partial enlarged plan views of the touch panel-equipped display device according to the first embodiment of the present invention, showing the arrangement of touch electrodes.
[FIG. 3] FIG. 3 shows a cross section of the touch panel-equipped display device according to the first embodiment of the present invention.
[FIG. 4] FIG. 4 is a cross-sectional view of the touch panel-equipped display device according to the first embodiment of the present invention, illustrating the first step of a method of manufacturing the device.
[FIG. 5] FIG. 5 is a cross-sectional view of the touch panel-equipped display device according to the first embodiment of the present invention, illustrating the next step of the method of manufacturing the device.
[FIG. 6] FIG. 6 is a cross-sectional view of the touch panel-equipped display device according to the first embodiment of the present invention, illustrating the third step of the method of manufacturing the device.
[FIG. 7] FIG. 7 shows a cross section of an application example of the touch panel-equipped display device according to the first embodiment of the present invention.
[FIG. 8] FIG. 8 is a plan view of a touch panel-equipped display device according to a second embodiment of the present invention, showing the pattern of touch electrodes of the touch panel module.
[FIG. 9] FIG. 9 shows partial enlarged plan views of the touch panel-equipped display device according to the second embodiment of the present invention, showing the arrangement of touch electrodes.
[FIG. 10] FIG. 10 shows a cross section of the touch panel-equipped display device according to the second embodiment of the present invention.
[FIG. 11] FIG. 11 shows a cross section of an application example of the touch panel-equipped display device according to the second embodiment of the present invention.

### EMBODIMENTS FOR CARRYING OUT THE INVENTION

A touch panel according to an embodiment of the present invention includes: a display panel having a front substrate and a back substrate and having an image display region composed of a plurality of pixels; and a touch panel module having touch electrodes formed on an outer surface of the front substrate, wherein each of the touch electrodes is formed of a metal material disposed in a pattern that overlaps, when viewed in a thickness direction of the display panel, an area outside an opening of one of the pixels formed on at least one of the front substrate and the back substrate (first arrangement).

In the first arrangement, the touch electrodes formed on the front substrate of the display panel may be made of a metal material so as to provide touch electrodes that do not adversely affect the visibility of a displayed image on the display panel and that have a significantly lower resistance than conventional touch electrodes made of a transparent conductive film. This may provide a touch panel-equipped display device with simple structure including a touch panel module capable of determining a touch location with high precision.

In the first arrangement, it is preferable that a color filter layer having color regions provided for the respective pixels for color image display and a black region formed between adjacent ones of the color regions is further included, wherein the area outside the opening of each of the pixels is the black region (second arrangement). Alternatively, in the first arrangement, it is preferable that the area outside the opening of each of the pixels is an electrode line formed on at least one of the front substrate and the back substrate (third arrangement). These areas are necessary for image display on the display panel. Further, each of them is disposed to fit to the configuration of the pixels. Accordingly, the metal material constituting the touch electrodes may be disposed and formed in a high horizontal density.

In any one of the first to third arrangements, it is preferable that the touch electrodes are formed in a grid with vertical and horizontal extensions (fourth arrangement). This may provide touch electrodes in an arrangement density in the horizontal direction that is sufficient to allow a touch location to be precisely determined while avoiding covering the opening of a pixel.

In any one of the first to fourth arrangements, it is preferable that the touch electrodes are formed of the same material as traces that connect the touch electrodes with terminals formed on the front substrate (fifth arrangement). This may reduce the number of parts used to construct the touch panel module. This may reduce the manufacturing cost of the touch panel module. Further, the touch electrodes and the traces may be formed simultaneously. Thus, the manufacturing process may be simplified.

In any one of the first to fifth arrangements, it is preferable that a transparent conductive layer overlaps the metal material constituting the touch electrodes (sixth arrangement). Thus, the metal material, which can be oxidized relatively easily, may be covered with a transparent conductive film. As a result, touch electrodes with less secular changes may be obtained.

In any one of the first to sixth arrangements, it is preferable that a floating electrode that is not electrically coupled with the touch electrodes is provided between adjacent ones of the touch electrodes, wherein the floating electrode is formed of a metal material disposed in a pattern that overlaps, when viewed in the thickness direction of the display panel, an area outside an opening of one of the pixels formed on at least one of the front substrate and the back substrate (seventh arrangement). This may prevent the user from seeing the pattern of the touch electrodes. Further, undesired electrical charge may be effectively prevented from being generated at a location where no touch electrode is formed, which would cause noise in a detected signal at the touch location.

In any one of the first to seventh arrangements, it is preferable that the display panel is a liquid crystal panel (eighth arrangement).

Now, embodiments of the present invention will be described with reference to the drawings.

In the description of the embodiments of the present invention below, a liquid crystal display device including a projection-type capacitive touch panel module formed on the front substrate of the liquid crystal panel will be illustrated as an exemplary touch panel-equipped display device according to the present invention.

However, the description below does not limit the configuration of the touch panel-equipped display device of the present invention. The touch panel module of the touch panel-equipped display device of the present invention is not limited to projection-type capacitive technologies, and touch panel modules of various types including touch electrodes formed as a planar pattern that are provided on the front substrate of the display device may be used. Further, the touch panel-equipped display device of the present invention need not use a liquid crystal panel as a display panel; various planar displays such as an organic or inorganic electroluminescent (EL) panel or a plasma display panel (PDP) or a field emission display may be used.

For purposes of explanation, the drawings referred to below schematically show only those of the components of the embodiments of the invention that are necessary to illustrate the present invention. Accordingly, the touch panel-equipped display device according to the present invention may include any component that is not shown in the drawings that will be referred to. Further, the sizes of components in the drawings such as in the thickness direction in cross sections do not exactly represent the sizes of the actual components or the size ratios of the components.

### First Embodiment

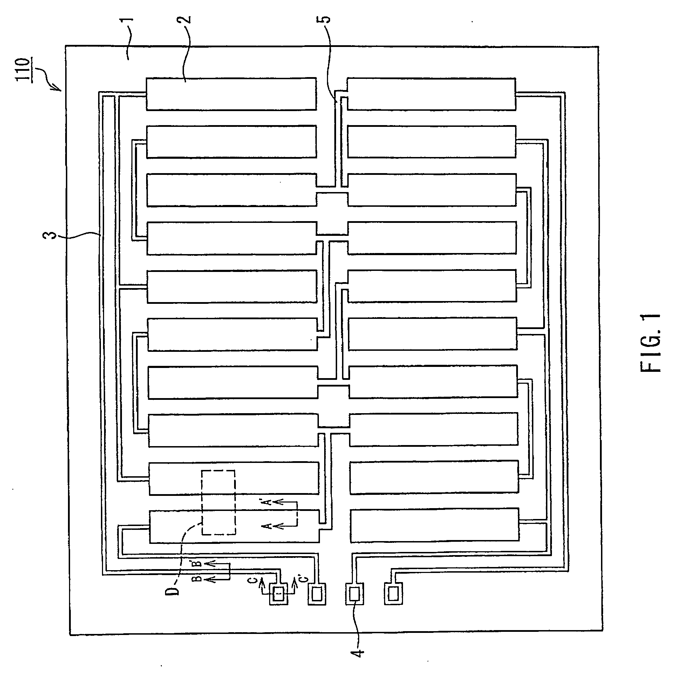

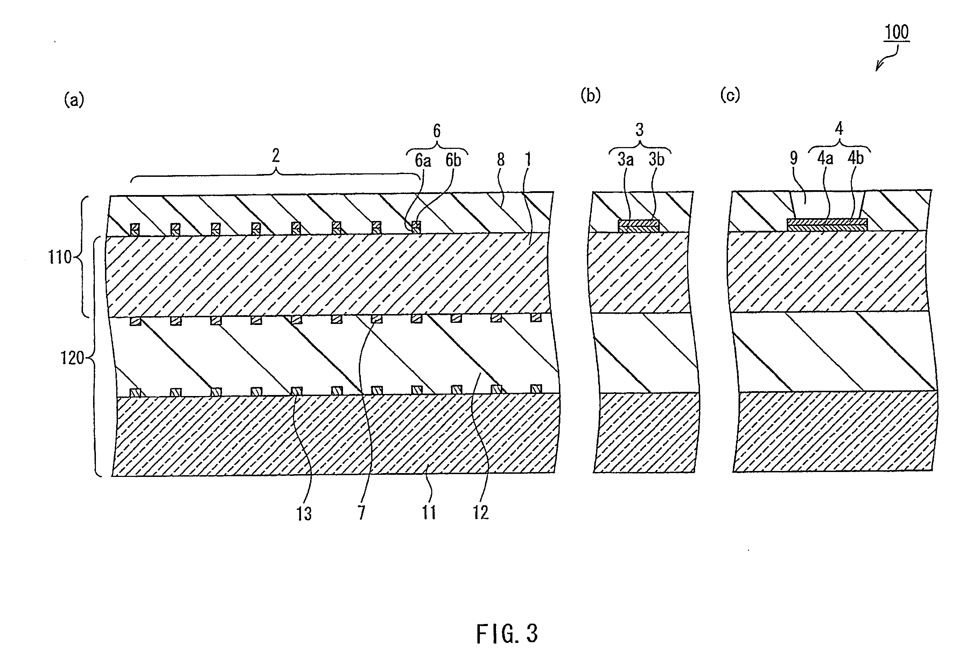

FIG. 1 is a plan view of a touch panel-equipped liquid crystal display device 100 (see FIG. 3) according to a first embodiment of the touch panel-equipped display device of the present invention, showing the pattern of touch electrodes 2 in a touch panel module 110.

The liquid crystal display device 100 of the present embodiment includes a liquid crystal panel 120 (see FIG. 3), which provides a display panel, and a touch panel module 110 having touch electrodes 2 formed in the pattern shown in FIG. 1 on the outer surface of the front surface 1 of the liquid crystal panel 120, i.e. the side of the front substrate opposite the inner surface which faces the back substrate 11 (see FIG. 3).

The touch panel module 110 of the liquid crystal display device 100 of the present embodiment employs a projection-type capacitive panel. Thus, as shown in FIG. 1, a total of 20 (twenty) generally rectangular touch electrodes 2 of the same size are arranged in ten columns and two rows, spaced apart with a predetermined distance between each other, for example about 200 µm to 800 µm. It should be noted that FIG. 1 illustrates an example only and the pattern of the touch electrodes 2 is not limited to that shown in FIG. 1. That is, the planar shape of the touch electrodes 2 need not be rectangular as in FIG. 1. Further, the number of the electrodes arranged in columns and rows of the pattern is not limited to 10×2, i.e. 20 in total. Furthermore, the connections between the touch electrodes 2 spaced apart with a predetermined distance are not limited to that shown in FIG. 1.

A plurality of terminals 4 are formed on the front substrate 1 of the liquid crystal panel 120 for outputting, to an external circuit board, a touch detection signal that is represented by a fluctuation in voltage value at a touch electrode 2. The terminals 4 are connected with the touch electrodes 2 via traces 3. The touch panel module 110 of the liquid crystal display device 100 of the present embodiment provides four terminals 4. A touch is detected by sensing a change in electrostatic capacitance generated when a fingertip or the like comes close to one of the touch electrodes 2, leading to a change in voltage of one or more of the four terminals 4. Further, touch electrodes 2 located far from each other in the pattern may be connected via a connection line 5.

In the touch panel module 110, the touch electrodes 2 are formed in a pattern that overlaps the image display region composed of a plurality of pixels to display an image on the liquid crystal panel 120. Consequently, the touch electrodes 2 and the connection lines 5 of the touch panel module 110 are disposed in a pattern that overlaps the image display region. The terminals 4 and traces 3 are disposed in a peripheral region, which is outside the image display region.

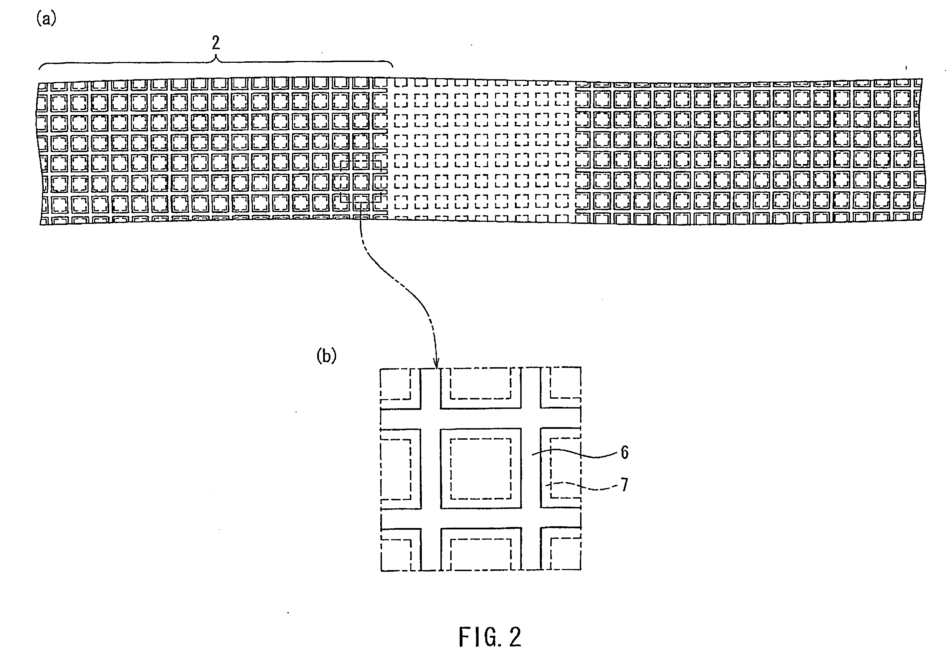

FIG. 2 shows enlarged plan views of portions of the liquid crystal display device 100 according to the present embodiment that include touch electrodes 2, intended to illustrate detailed structure of the touch electrodes 2. FIG. 2(a) is an enlarged view of section D defined by dotted lines in FIG. 1. FIG. 2(b) is a further enlarged view of touch electrodes 2, showing the rectangular section defined by dotted lines in FIG. 2(a).

As shown in FIGS. 2(a) and 2(b), a touch electrode 2 of the touch panel module 110 of the present embodiment includes a metal material 6 disposed in a region outside the openings of the pixels forming the image display region of the liquid crystal panel 120, i.e. in a pattern that overlaps a black layer 7, which is a black region called a black matrix (BM) formed between color regions (not shown), which are each provided for a subpixel for color image display. The color regions and the black region (black layer 7) are included in a color filter layer formed on the front substrate 1. As shown in FIG. 2(b), the metal material 6 is in a grid with lines that are slightly narrower than the black layer 7. Further, as shown in FIG. 1, the touch electrodes 2 are in a flat pattern to enable touch detection. Adjacent touch electrodes 2 are spaced apart with a predetermined distance. Thus, in areas between adjacent touch electrodes 2 where no touch electrode 2 is formed, no metal material 6 grid is present, and only the black layer 7 formed on the front substrate 1 is visible.

Although FIG. 2 shows a grid-like pattern of the black layer 7 of the liquid crystal panel 120 with generally square openings for the sake of convenience, it should be noted that this is not intended to limit the configuration of the pattern of the black layer 7 of the liquid crystal panel 120. The configuration of window-like openings in the black layer 7 formed on the inner surface of the front substrate 1 of the liquid crystal panel 120 depends on the configuration of the pixels of the liquid crystal panel 120, and they may be generally square or may be rectangular and vertically long. Further, the width of the rows and that of the columns of the black layer 7 may be different from each other, or a bend may be present, or, if the liquid crystal panel uses a color filter having three color regions, i.e. R, G and B to achieve color display, the width of one set of three lines for these colors of the black layer 7 may be different from another set of three lines. In such cases, too, the metal layer 6 forming the touch electrodes 2 is disposed in a pattern that overlaps the black layer 7 when viewed in the thickness direction of the liquid crystal panel 120, fitting to the pattern of the black layer 7.

FIG. 3 shows a cross section of the liquid crystal display device 100 of the present embodiment. FIG. 3(a) illustrates a section with a touch electrode 2 and shows a cross section along arrow A-A' of FIG. 1. FIG. 3(b) illustrates a trace 3 and shows a cross section along arrow B-B' of FIG. 1. FIG. 3(c) illustrates a terminal 4 and shows a cross section along arrow C-C' of FIG. 1.

As shown in FIGS. 3(a), 3(b) and 3(c), the touch panel-equipped liquid crystal display device 100 according to the present embodiment includes a touch panel module 110 for detecting a touch from the outside, and a liquid crystal panel 120, which serves as a display panel, stacked upon each other. The front substrate 1 constituting part of the liquid crystal panel 120 also serves as a substrate for the touch panel module 110.

The liquid crystal panel 120 may be a typical transparent liquid crystal panel. A liquid crystal layer 12 is sandwiched between two glass substrates constituting part of the liquid crystal panel 120, i.e. the front substrate 1 and the back substrate 11.

A color filter layer, not shown, is provided on the inner side of the front substrate 1, i.e. the side thereof facing the back substrate 11, for each pixel for color image display. The color filter layer includes a color region (not shown) provided for each pixel for color image display and a black layer 7 which provides a black region, i.e. a black matrix between adjacent color regions. On the inner side of the front substrate 1 is also provided a counter electrode, not shown, closer to the liquid crystal layer 12 than the color filter is, for applying a predetermined voltage on the liquid crystal layer 12.

Pixel electrodes, not shown, which each constitute part of one pixel, are disposed on the inner side of the back substrate 11, i.e. the side thereof facing the front substrate 1, forming a plurality of rows and a plurality of columns in a matrix. The voltage between the pixel electrodes and the counter electrode on the front substrate 1 is regulated to change the orientation of liquid crystal molecules in the liquid crystal layer 12 for image display. The area with the pixel electrodes on the back substrate 11 provides the image display region of the liquid crystal panel 120. The image display region of the liquid crystal panel 120 is substantially identical with the touch detection region of the touch panel module 110.

A plurality of gate lines, not shown, and a plurality of source lines 13, both of which are electrode lines, are provided in the image display region of the back substrate 11. The gate lines are disposed in the horizontal direction of the pixel electrodes. The source lines 13 are disposed in the vertical direction. A TFT, not shown, is formed close to the intersection of a gate line and a source line 13, which cross each other, and is connected to the respective pixel electrode. A gate voltage is applied to each gate line in series such that a row of TFTs, which are switching elements, are turned on, i.e. are selected. Further, a voltage necessary for image display is applied to the pixel electrodes belonging to the selected row via the source lines 13.

A pair of polarizers, not shown, are provided, one above the front substrate 1 of the liquid crystal panel 120, as viewed in the drawings of FIGS. 3(a), 3(b) and 3(c), and the other below the back substrate 11, as viewed in the drawings, for working together with the liquid crystal layer 12 to control transmitted light for image display, where the angles of polarization of the polarizers differ by a predetermined degree. Further, an insulating film is provided on the inner surface of the front substrate 1 and the back substrate 11 of the liquid crystal panel 120, which faces the liquid crystal layer 12, for covering the electrodes and switching elements, mentioned above. An oriented film is provided on the surface of the insulating film close to the liquid crystal layer 12 for orienting liquid crystal molecules. Since the insulating film and the oriented film are common elements in a liquid crystal panel, they are not shown in the drawings or described herein in detail.

A backlight, not shown, is provided further to the back of the liquid crystal panel 120 for emitting illumination light necessary to display an image on the liquid crystal panel 120. The backlight for the touch panel-equipped liquid crystal display device 100 of the present embodiment may be, for example, a so-called side-light type or edge-light type backlight, and may be composed of a light guide in the form of a flat plate, and a light source such as a cold-cathode fluorescent tube or light-emitting diode provided on a side of the light guide. Illumination light from the light source, entering the light guide from a side thereof, is reflected multiple times within the light guide to be diffused and conveyed, and is emitted as uniform light from the main surface of the light guide, which faces the liquid crystal panel 120.

It should be noted that the backlight of the liquid crystal display device 120 of the present invention need not be a side-light type one, as discussed above. A so-called direct-lighting type backlight may be used, where light sources are disposed across the back side of the liquid crystal panel 120 and illumination light from the light sources is emitted toward the liquid crystal panel 120 through the optical sheet such as a light collection sheet or a diffusion sheet. Further, the light source is not limited to a cold-cathode fluorescent tube or a light emitting diode. Various light sources such as a hot-cathode fluorescent tube or an EL illuminator may be used.

In the above description of the configuration of the liquid crystal panel, the front substrate 1 is a so-called CF substrate having a color filter layer and the back substrate 11 is an active matrix substrate having pixel electrodes and TFTs for driving them. However, using a CF substrate as a front substrate 1 is not a requirement in the touch panel-equipped liquid crystal display device 100 of the present embodiment. The front substrate 1 may be an active matrix substrate and the back substrate 11 may be a CF substrate. Further, the color filter layer may be formed on the active matrix substrate. Furthermore, although the so-called active matrix type has been described for the liquid crystal panel 120, the liquid crystal panel 120 in the liquid crystal display device 100 of the present embodiment is not limited thereto, and a so-called simple matrix-type liquid crystal panel may be used. The manner in which the liquid crystal panel 120 is driven is not limited to so-called vertical orientation methods, in which a voltage is applied between the opposite substrates; other driving methods, such as IPS methods in which a voltage is applied in the direction of the plane of the substrate, may be employed.

Further, the liquid crystal panel 120 itself need not be transmissive or semi-transmissive ones, where illumination light from the backlight may be used for image display. A reflective liquid crystal panel, where external light passing through the front substrate 1 to enter the panel and is reflected from the reflection electrodes formed on the back substrate 11 to be used for image display may be used as well. If a reflective liquid crystal panel is used, the backlight and the polarizers discussed above, provided further to the back of the back substrate 11 (i.e. to the bottom in FIG. 3), are not needed.

As shown in FIG. 3(a), in the liquid crystal panel 120, a touch electrode 2 for detecting a touch by the user is provided on the front substrate 1 at a location that overlaps a location in the image display region which has a plurality of pixels, each of which is one unit for image display. The image display region and the detection region for a touch location overlap each other in the thickness direction of the liquid crystal panel 120 i.e. the vertical direction in the drawing of FIG. 3(a).

The metal material 6, constituting the touch electrode 2, are formed by stacking an aluminum layer 6a for enhancing electrical conductivity and a BM metal layer 6b, which is a black metal film such as a chromium oxide film or a film of an oxide of an alloy containing Ni, Mo, Al and Ti for reducing reflection of external light from the aluminum layer 6a. The metal material 6 constituting the touch electrode 2 is provided in a pattern that overlaps, in the thickness direction of the liquid crystal panel 120 i.e. the vertical direction in FIG. 3(a), the black layer 7 provided on the inner surface of the front substrate 1 of the liquid crystal panel 120 and the source lines 13, which are electrode lines provided on the inner surface of the back substrate 11.

The black layer 7 and the source lines 13 are formed on the boundaries between adjacent pixels. The boundaries between adjacent pixels are outside the openings and are where transmissive light to be used for image display on the liquid crystal panel 120 is not passed. Accordingly, the metal material 6 provided in a pattern that overlaps the areas outside the openings in the thickness direction of the liquid crystal panel 120 does not adversely affect visibility of an image displayed on the liquid crystal panel 120.

Although FIG. 3(a) shows a liquid crystal display device 100 of the present embodiment including a black layer 7 and source lines 13, which are electrode lines, provided in patterns that overlap each other in the thickness direction of the liquid crystal panel 120, and a metal material 6 constituting the touch electrode 2 provided in a pattern that overlaps the black layer 7 and the source lines 13 in the thickness direction of the liquid crystal panel 120, such an arrangement is not a requirement in the touch panel-equipped display device of the present invention. For example, if either a black layer or electrode lines are provided or if these two elements are provided in patterns that are offset from each other when viewed in the thickness direction of the liquid crystal panel, a metal material may be suitably provided in a pattern that overlaps either the black layer or the electrode lines in the thickness direction of the liquid crystal panel. A metal material constituting a touch electrode may be suitably provided in a pattern that overlaps, when viewed in the thickness direction of the display panel, areas outside the pixel openings where light for image display may be passed or light is emitted in the case of a light-emitting element within a pixel of the display panel, i.e. areas that do not contribute to image display in the pixel, and these areas need not be a black layer or electrode lines.

Since the metal material 6 constituting the touch electrode 2 is prone to oxidization, a protective film 8 of SiN, SiO₂ or other transparent resins is provided on the front substrate 1 to cover the metal material 6, as shown in FIG. 3(a).

As shown in FIG. 3(b), a trace 3 is formed by stacking an aluminum layer 3a and a BM metal layer 3b, similar to the metal material 6 constituting the touch electrode 2. As discussed above, traces 3 are provided on the periphery, outside the image display region of the liquid crystal panel 120. Accordingly, nothing corresponding to a black layer 7 or source lines 13, which are electrode lines, is provided on the inner surfaces of the front substrate 1 and the back substrate 11 in areas where the traces 3 are provided. A protective film 8 of SiN, SiO₂ or other transparent resins is provided to cover the traces 3.

A terminal 4, shown in FIG. 3(c), is formed on the front substrate 1 by stacking an aluminum layer 4a and a BM metal layer 4b, similar to the metal material 6 that constitutes a touch electrode 2 or a trace 3. Forming a metal material 6 constituting a touch electrode 2 from the same material as a trace 3 and a terminal 4 is not a requirement in the present invention. However, forming a metal material 6, a trace 3 and a terminal 4 from the same material will allow them to be formed simultaneously in one single step. This will result in reduced costs in manufacturing a touch panel-equipped display device 100.

A protective film 8 of SiN, SiO₂ or other transparent resins is provided to cover the terminals 4. However, an opening 9 is formed on the protective film 8 at a location that corresponds to the center of a terminal 4. This allows a connection electrode terminal to be in contact with the surface of the terminal 4 to establish connection with an external board, not shown, so as to allow a change in voltage of the touch electrode 2 to be read out.

As to the thicknesses of the components shown in FIGS. 3(a), 3(b) and 3(c), for example, the front substrate 1 may be 0.7 mm thick, the aluminum layers 6a, 3a and 4a may be 150 nm thick, the BM metal layers 6b, 3b and 4b may be 100 nm thick, the protective film 8 may be 600 nm thick if it is made of SiN film and 3 µm thick if it is made of a transparent resin film, and the entire liquid crystal panel 120 may be around 1.4 mm thick.

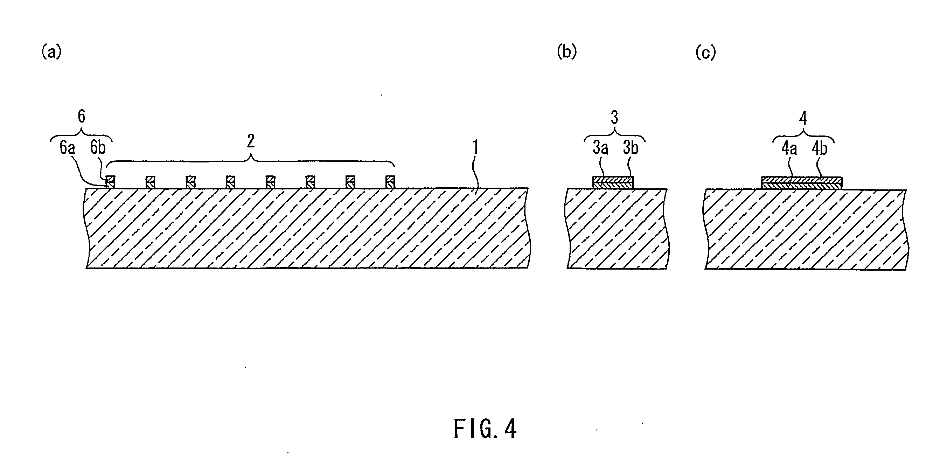

Now, referring to FIGS. 4 to 6, a method of manufacturing a touch panel-equipped liquid crystal display device according to the present embodiment will be described. Similar to the cross section shown in FIG. 3, FIGS. 4 to 6 illustrate the cross sections of: in (a), a touch region with a touch electrode 2, corresponding to the area along arrow A-A' of FIG. 1; in (b), a trace 3 corresponding to the area along arrow B-B'; and in (c), a terminal 4 corresponding to the area along arrow C-C'.

On a glass substrate that is to be a front substrate 1 of the liquid crystal panel 120, an aluminum layer and a BM metal layer are formed in this order using sputtering. A resist film is then formed upon it, and resist is left at locations where a metal material 6 of touch electrodes 2, traces 3 and terminals 4 are to be formed, forming a resist pattern. Then, the resist pattern is used as a mask to etch the BM metal layer using a mixed acid solution, and then to etch the aluminum layer using a mixed acid solution of phosphoric acid, acetic acid and nitric acid. Then, the resist pattern on the surface is removed using a resist remover. The result is shown in FIGS. 4(a), 4(b) and 4(c).

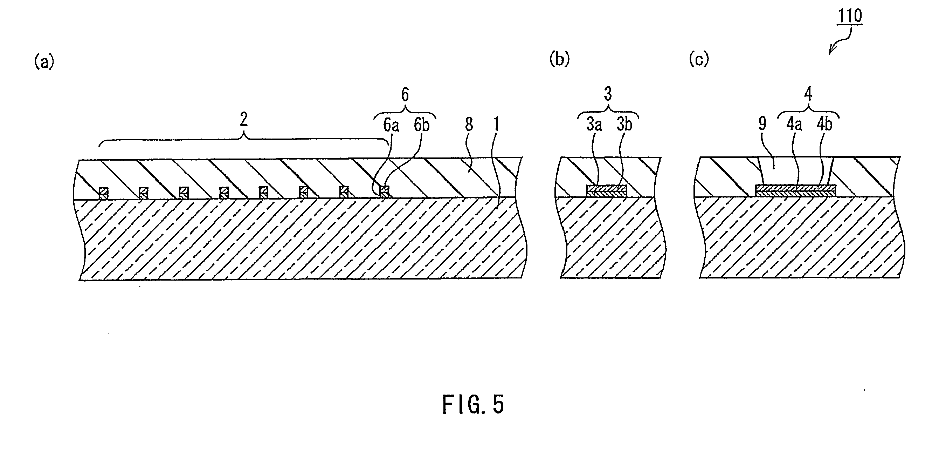

Next, a SiN film that is to be a protective film 8 is formed on the surface of the front substrate 1 using chemical vapor deposition (CVD). For each terminal 4, an opening 9 is formed using photolithography to expose the BM metal layer 4b. Specifically, a resist pattern is formed and, using this resist pattern, an opening 9 is formed using dry etching (RIE) by means of fluorine gas to expose the BM metal layer 4b. The process for forming a touch panel module 110 on the front substrate 1 is thus completed. The result is shown in FIGS. 5(a), 5(b) and 5(c).

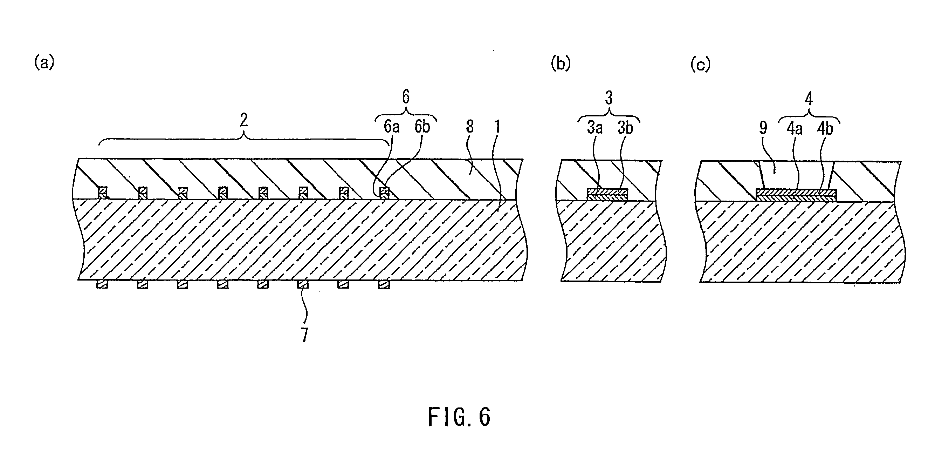

Then, to manufacture a liquid crystal panel 120, a counter electrode, not shown, a color filter layer, a black layer 7 and other components are formed on the inner surface of the front substrate 1 in an area that corresponds to an image display region. For this step, in an area that is to provide an image display region, it is important to precisely position the black layer 7 formed on the inner surface of the front substrate 1 with the metal material 6 which constitutes the touch electrodes 2 formed on the outer surface of the front substrate 1. The result is shown in FIGS. 6(a), 6(b) and 6(c).

Next, a back substrate 11 is fabricated using a typical process for manufacturing a liquid crystal panel and a liquid crystal layer 12 is held between the front substrate 1 and the back substrate 11, which are sealed together.

To fabricate a liquid crystal panel 120, a front substrate 1 is first fabricated in the above described manner, and a back substrate 11 is fabricated using a manufacturing method known in the art. Then, a step of forming an oriented film is performed, where a polyimide which is to provide an oriented film for orienting liquid crystal molecules is formed in the image display region of each of the front substrate 1 and the back substrate 11. Once the oriented film is formed, a step of effecting orientation is performed, where grooves in a specified direction are formed on the oriented films to arrange liquid crystal molecules in this specified direction. Once orientation is effected, a step of spraying spacer is performed, where spacer is sprayed on the front substrate 1. Once spacer is sprayed, a step of forming a seal is performed, where a seal material is directly disposed on the back substrate 11 using a dispenser. Once the step of forming a seal is performed, a step of injecting liquid crystal is performed, where a specified amount of liquid crystal is dripped in the region defined by the seal material and then the front substrate 1 and the back substrate 11 are positioned with respect to each other and attached to each other under vacuum. Then, the seal material is hardened using UV irradiation. Further, a step of treating the front substrate 1 or the back substrate 11, attached to each other, using a chemical such as hydrofluoric acid may be performed where necessary.

Finally, the glass substrate on which such display devices were simultaneously formed and are arranged next to each other is divided, and a polarizer is attached to each of the front substrate 1 and the back substrate 11 to produce a liquid crystal display device 100 of the present embodiment, whose cross section is shown in FIGS. 3(a), 3(b) and 3(c) with its components.

In the above method of manufacturing a liquid crystal display device 100 of the present embodiment, the touch panel module 110 is formed before the liquid crystal panel 120 is formed. However, in the reversed order, the liquid crystal panel 120 may be formed before the touch panel module 110 is formed. More specifically, a liquid crystal panel 120 may be fabricated using a typical process of manufacturing a liquid crystal panel and then a metal material 6 which constitutes touch electrodes 2 may be formed on the outer surface in a pattern that exactly overlaps the areas outside the openings in the image display region of the front substrate 1 of the liquid crystal panel 120, using the patterning method described above.

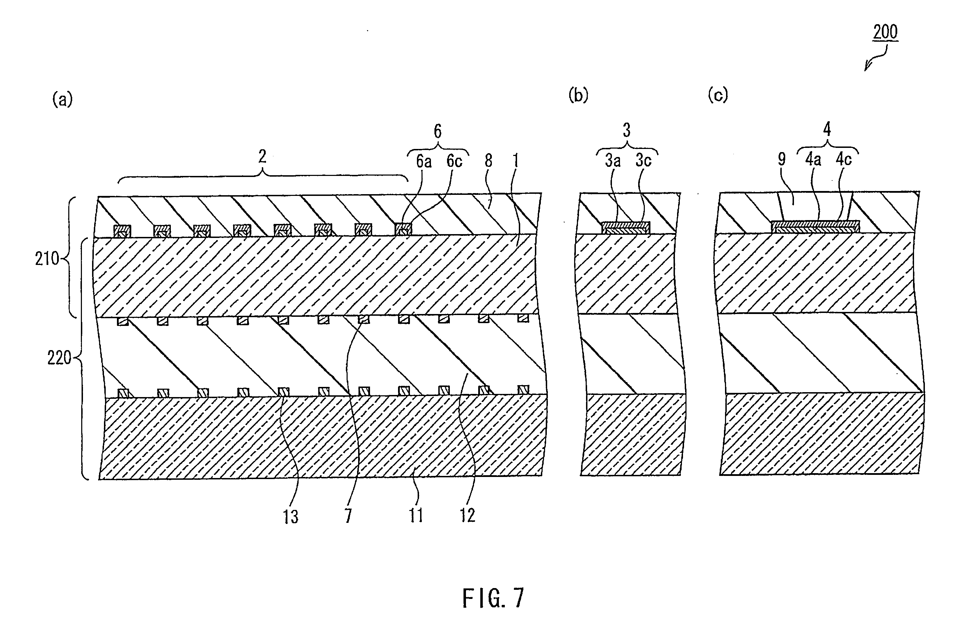

Next, an application example of the touch panel-equipped liquid crystal display device of the present embodiment will be described with reference to FIG. 7.

FIG. 7 shows a cross section of a liquid crystal display device 200, which is an application example of present embodiment. The liquid crystal display device 200 of the application example shown in FIG. 7 is different from the liquid crystal display device 100 of the present embodiment that has been described and is shown in FIG. 3 in that various line layers formed on the front substrate 1, i.e. a metal material 6 which constitutes touch electrodes 2, traces 3 and terminals 4 are formed of a stack of aluminum layers 6a, 3a and 4a and MoNb layers 6c, 3c and 4c, and further in that the upper layers 6c, 3c and 4c, made of MoNb, cover the lower layers 6a, 3a and 4a, made of aluminum, respectively.

Thus, as the aluminum layers 6a, 3a and 4a, including their sides, are covered with the MoNb layers 6c, 3c and 4c, respectively, galvanic corrosion that may occur as the aluminum layers 6a, 3a and 4a come into direct contact with the transparent conductive material constituting the protective film 8 may be prevented. If galvanic corrosion occurs between the aluminum layers 6a, 3a and 4a and the transparent conductive layer (protective film 8), corroded portions are colored and the metal material pattern of the touch electrodes 2, connection electrodes (traces 3, terminals 4 and connection lines 5) or the like may become visible to the user. However, forming MoNb layers 6c, 3c and 4c between the aluminum layers 6a, 3a and 4a and the transparent conductive layer (protective layer 8), as in the present application example, will effectively prevent galvanic corrosion.

### Second Embodiment

Next, a second embodiment of the touch panel-equipped display device of the present invention will be described with reference to drawings.

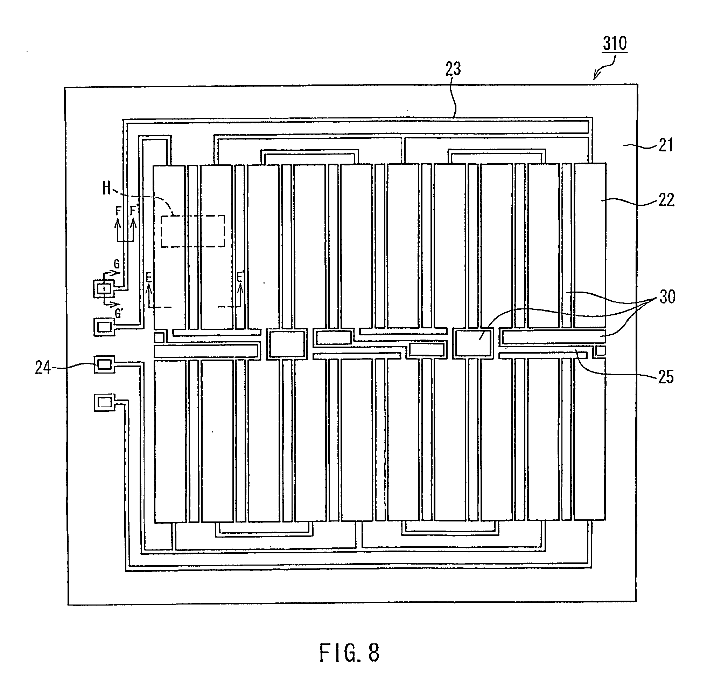

FIG. 8 is a plan view of a touch panel-equipped liquid crystal display device 300 according to the second embodiment of the touch panel-equipped display device of the present invention, showing the pattern of touch electrodes 22 of the touch panel module 310.

The pattern of the touch electrodes 22 of the touch panel module 310 of the liquid crystal display device 300 of the present embodiment is different from the pattern of the touch electrodes 2 of the liquid crystal display device 100 of the first embodiment, described in connection with FIG. 1, in that floating electrodes 30 that are not electrically coupled with the touch electrodes 22 are each provided between adjacent touch electrodes 22.

As described above, in a projection-type capacitive touch panel, touch electrodes 22 must be spaced apart with a predetermined distance. A grid of a metal material is formed on the surface of the front substrate 1 in a region where the touch electrodes 2 are provided. On the other hand, nothing is provided on the surface of the front substrate 1 between adjacent touch electrodes 22. Such surface unevenness of the front substrate 1 may cause the pattern of the touch electrodes 2 to be visible to the user of the touch panel-equipped display device 100, leading to deterioration in quality of displayed images. In addition, floating electrical charge may be accumulated in areas with no touch electrode 2. Thus, when the user touches a touch electrode 2, floating electrical charge may cause noise in a touch detection signal.

As illustrated in the context of the liquid crystal display device 300 of the second embodiment, forming floating electrodes 30 that are not electrically coupled with the touch electrodes 22 each between adjacent touch electrodes 22 will solve the above problems, i.e. visibility of the pattern of the touch electrodes 22 to the user and noise in a touch signal caused by floating electrical charge.

The floating electrodes 30 are provided for the above purposes. Consequently, they are not limited to a specific configuration as long as they are disposed between adjacent touch electrodes 22. As shown in FIG. 8, the floating electrodes 30 provided in the touch panel module 310 of the liquid crystal display device 300 of the present embodiment may be each disposed appropriately between adjacent touch electrodes 22 or between a connection line 25 connecting touch electrodes 22 and a touch electrode 22, where the distance between a touch electrode 22 and a floating electrode 30 is a predetermined value such as 100 µm or less, in the form of elongated rectangles and each disposed between long sides of rectangular touch electrodes 22 or in the form of a rectangle with a small aspect ratio and each disposed between short sides of touch electrodes 22.

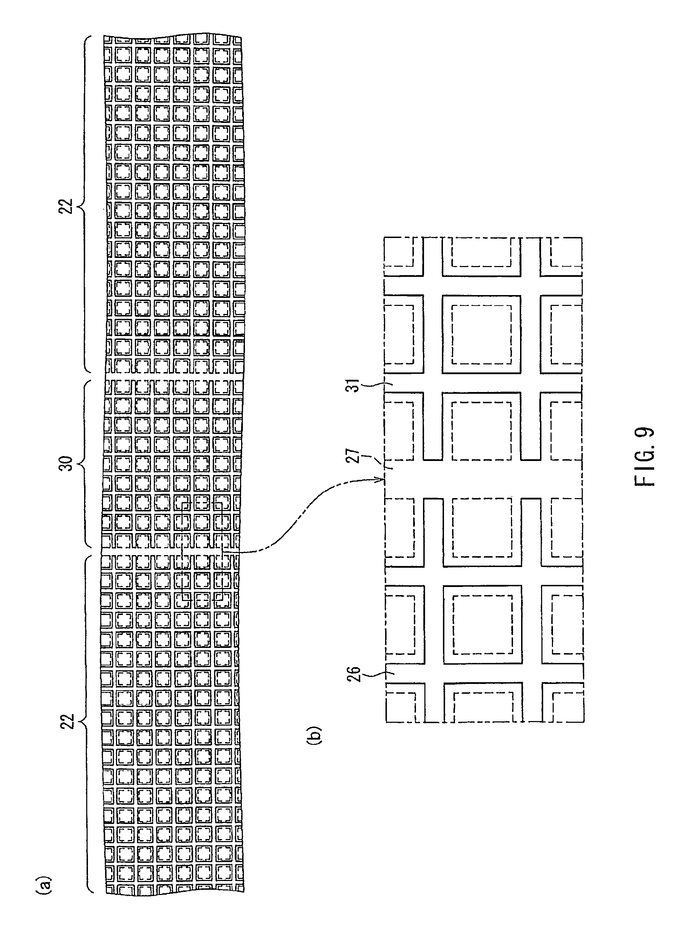

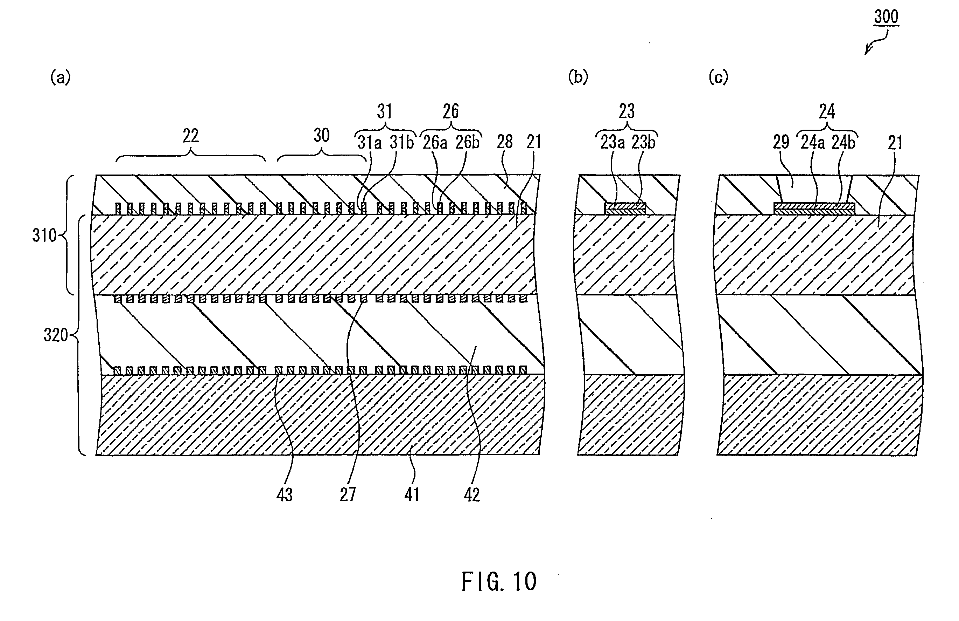

As shown in the enlarged plan view of FIG. 9 and the cross section of FIG. 10, the floating electrodes 30 are formed of a metal material 31 disposed in a pattern that overlaps the black layer 27, which is outside the openings of the pixels, when viewed in the thickness direction of the liquid crystal panel 320 i.e. the display panel, similar to the touch electrodes 22. The metal material 31 is formed by stacking an aluminum layer 31a and a BM metal layer 31b, similar to the first embodiment.

In FIG. 10, FIG. 10(a) illustrates a section with a touch electrode 22 and shows a cross section along arrow E-E' of FIG. 8. FIG. 10(b) illustrates a trace 23 and shows a cross section along arrow F-F' of FIG. 8. FIG. 10(c) illustrates a terminal 24 and shows a cross section along arrow G-G' of FIG. 8.

As shown in FIGS. 9 and 10(a), a floating electrode 30 is provided in a pattern that overlaps, when viewed in the thickness direction of the liquid crystal panel 320, a black layer 27 provided between color regions (not shown), which are each provided for a pixel on the inner surface of the front substrate 21 of the liquid crystal panel 320, and the source lines 43, which are line electrodes provided on the inner surface of the back substrate 41. The arrangement of the traces 23, the terminals 24 and the metal material 26 of the touch panel 310 as well as the method of fabricating a touch panel-equipped liquid crystal display device 300 are similar to those of the first embodiment, and their description will be omitted. That is, the traces 23, the terminals 24 and the metal material 26 are formed by stacking aluminum layers 23a, 24a and 26a and BM metal layers 23b, 24b and 26b.

In the liquid crystal display device 300 of the present embodiment, the floating electrodes 30 and the touch electrodes 22 have the same configuration such that the metal material 31 constituting the floating electrodes 30 may be formed at the same time as the metal material 26 constituting the touch electrodes 22.

As discussed above, providing floating electrodes 30 formed of a metal material 31 disposed in a pattern that overlaps areas outside the openings of the pixels, similar to the touch electrodes 22, between adjacent touch electrodes 22 of the touch panel module 310, as in the second embodiment, will provide the additional advantages of eliminating the visibility of the touch electrode pattern to the user and preventing reduction in precision of a touch signal due to floating electrical charge, in a touch panel of the present invention where precision of touch detection is improved with simple structure.

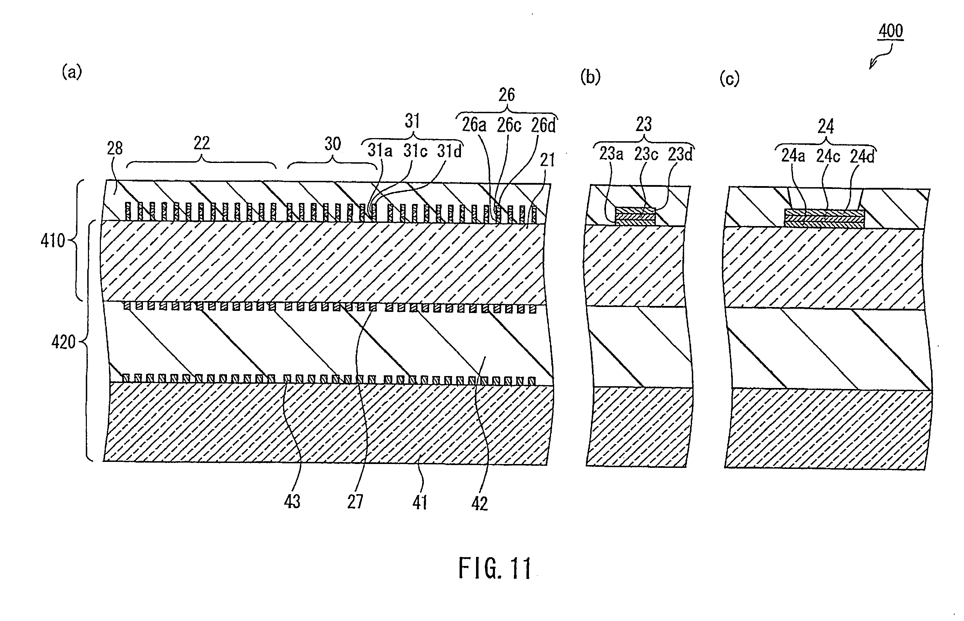

Next, an application example of the liquid crystal display device of the present embodiment will be described with reference to FIG. 11.

FIG. 11 shows a cross section of a touch panel-equipped liquid crystal display device 400 according to the application example of the present embodiment. The liquid crystal display device 400 of the application example shown in FIG. 11 is different from the liquid crystal display device 300 of the basic arrangement of the present embodiment shown in FIG. 10 in that the line layer constituting the touch electrodes 22, the floating electrodes 30, the traces 23 and the terminals 24 is composed of three layers: aluminum films 26a, 31a, 23a and 24a as the first layer; MoNb layers 26c, 31c, 23c and 24c as the second layer; and ITO layers 26d, 31d, 23d and 24d as the third layer.

In such a three-layer structure of aluminum, MoNb and ITO line layers, the outermost line layer may be an ITO layer, which is difficult to oxidize. Further, interposing an MoNb layer between the ITO layer and the aluminum layer will prevent galvanic corrosion.

Such a three layer-structure line layer of aluminum, MoNb and ITO may be easily fabricated during manufacture of a touch panel module by first stacking an aluminum layer, an MoNb layer and an ITO layer in this order using sputtering, forming a resist pattern and using this resist pattern to etch the ITO by means of an oxalic acid solution and then etch the MoNb layer and the aluminum film simultaneously by means of a mixed acid solution of phosphoric acid, acetic acid and nitric acid.

Although a line layer of three-layer structure has been described in the context of the application example of the second embodiment, it may be, of course, used in the touch panel-equipped liquid crystal display device 100 which does not use a floating electrode described in connection with the first embodiment. Using such a line layer of tree-layer structure will provide a touch panel-equipped display device with a touch panel module that can resist to changes over time and ensure stable electrical conduction.

### INDUSTRIAL APPLICABILITY

The present invention is industrially useful in a wide range of applications as a touch panel-equipped display device with improved precision in detection of a touch achieved by the use of a metal material for the touch electrodes.

## Claims

1. A touch panel-equipped display device, comprising:
a display panel having a front substrate and a back substrate and having an image display region composed of a plurality of pixels; and
a touch panel module having touch electrodes formed on an outer surface of the front substrate,
wherein each of the touch electrodes is formed of a metal material disposed in a pattern that overlaps, when viewed in a thickness direction of the display panel, an area outside an opening of one of the pixels formed on at least one of the front substrate and the back substrate.

2. The touch panel-equipped display device according to claim 1, further comprising:
a color filter layer having color regions provided for the respective pixels for color image display and a black region formed between adjacent ones of the color regions,
wherein the area outside the opening of each of the pixels is the black region.

3. The touch panel-equipped display device according to claim 1 or 2, wherein the area outside the opening of each of the pixels is an electrode line formed on at least one of the front substrate and the back substrate.

4. The touch panel-equipped display device according to any one of claims 1 to 3, wherein the touch electrodes are formed in a grid with vertical and horizontal extensions.

5. The touch panel-equipped display device according to any one of claims 1 to 4, wherein the touch electrodes are formed of the same material as traces that connect the touch electrodes with terminals formed on the front substrate.

6. The touch panel-equipped display device according to any one of claims 1 to 5, wherein a transparent conductive layer overlaps the metal material constituting the touch electrodes.

7. The touch panel-equipped display device according to any one of claims 1 to 6, wherein a floating electrode that is not electrically coupled with the touch electrodes is provided between adjacent ones of the touch electrodes, wherein the floating electrode is formed of a metal material disposed in a pattern that overlaps, when viewed in the thickness direction of the display panel, an area outside an opening of one of the pixels formed on at least one of the front substrate and the back substrate.

8. The touch panel-equipped display device according to any one of claims 1 to 7, wherein the display panel is a liquid crystal panel.
